# EUROPÄISCHE PATENTSCHRIFT

(11) **EP 2 000 710 B1**
(45) Veröffentlichungstag und Bekanntmachung des Hinweises auf die Patenterteilung: **20.05.2015**
(21) Anmeldenummer: 08006074.2
(22) Anmeldetag: 28.03.2008
(51) Int. Cl.: F16J 15/10, B29C 70/74, F16L 23/16, F16L 21/00

(54) **Statisches Bauteil mit zumindest einer angeformten statischen Dichtung und Verfahren zu seiner Herstellung**
Static component with at least one moulded static seal and method for its manufacture
Composant statique doté d'au moins un joint statique moulé et son procédé de fabrication

(30) Priorität: 08.06.2007 DE 102007026514
(43) Veröffentlichungstag der Anmeldung: 10.12.2008
(73) Patentinhaber: Gustav Magenwirth GmbH & Co. KG, 72574 Bad Urach (DE)
(72) Erfinder: Walker, Steffen, 70794 Filderstadt (DE); Glaser, Detlef, 72587 Römerstein (DE)
(74) Vertreter: Andrae | Westendorp Patentanwälte Partnerschaft

(56) Entgegenhaltungen:
- EP-A1- 0 618 387
- EP-A2- 1 217 267
- EP-A2- 1 617 067
- WO-A1-2005/121611
- DE-A1- 10 324 126
- DE-U1- 8 624 855
- FR-A- 1 105 990
- US-A- 5 803 507
- US-A1- 2005 285 354
- US-A1- 2006 066 061

## Beschreibung

Die Erfindung betrifft ein statisches Bauteil mit zumindest zwei angeformten statischen Dichtungen und ein herfahren zu seiner Herstellung.

Ein "statisches" Bauteil bedeutet im Zusammenhang mit der vorliegenden Beschreibung und den vorliegenden Ansprüchen ein Bauteil, das zumindest einen oder mehrere Fluidkanäle aufweist, der bzw. die mit zumindest einem oder mehreren Fluidkanälen von zumindest einem oder mehreren angrenzenden Bauteilen statisch verbunden ist bzw. sind.

Eine "statische" Dichtung bedeutet im Zusammenhang mit der vorliegenden Beschreibung und den vorliegenden Ansprüchen eine Dichtung, die in einem "statischen Bauteil" um eine oder mehrere Öffnungen von zumindest einem und eventuell mehreren Fluidkanälen angeordnet ist und diese statisch gegenüber einer oder mehreren Öffnungen von zumindest einem und eventuell mehreren weiteren Fluidkanälen abdichtet, die in einem angrenzenden Bauteil angeordnet ist, das nicht unbedingt statisch ist, aber relativ zu dem statischen Bauteil statisch ist. Ein statisches Bauteil mit einer angeformten statischen Dichtung ist aus der DE 100 57 379 B4 und aus der DE 103 24 126 A1 bekannt.
Bei dem bekannten statischen Bauteil erhält das angespritzte Dichtungsmaterial auf dem Grund der das Dichtungsmaterial aufnehmenden Aufnahmenut eine gewisse Haftung, damit die Dichtung bei dem Transport und der Montage des statischen Bauteils nicht einfach aus der Aufnahmenut herausfallen kann, indem der Nutgrund mit einer gewissen Rauhigkeit ausgeführt wird.

Der bekannte Stand der Technik hat den Nachteil, dass nur eine gewisse Haftung erfolgt und weiterhin die Gefahr besteht, dass die statische Dichtung herausfallen kann.

Aus der DE 36 39 218 C2 ist es bekannt, das Dichtungamaterial unter Formung der statischen Dichtung an der Randfläche eines Ventildeckels und unter Zwischenschaltung eines Haftvermittlers anzuspritzen. Dieser Stand der Technik hat den Nachteil, dass die Haftwirkung des Haftvermittlers nachlassen kann, weshalb die Gefahr besteht, dass die statische Dichtung herausfallen kann.

Aus der US 2006/0066061 A1 ist ein verstärkter Dichtungsring bekannt.

Der Erfindung liegt daher die Aufgabe zugrunde, ein statisches Bauteil mit zumindest zwei angeformten statischen Dichtungen anzugeben, bei dem die Gefahr, dass die statische Dichtung von dem statischen Bauteil bei sachgerechter Handhabung getrennt wird, praktisch aufgeschlossen ist.

Die Aufgabe der Erfindung wird mit einem statischen Bauteil gemäß den Merkmalen von Anspruch 1 gelöst. Vorteilhafte Ausgestaltungen der Erfindung sind in den abhängigen Ansprüchen angegeben.

Die erfindungsgemäße Lösung hat den Vorteil, dass wegen der formschlüssigen Verbindung die Dichtung bei dem Transport bzw. der Montage nicht verrutschen und sich auch nicht von dem statischen Bauteil lösen kann. Daher ist die richtige Ausrichtung der Dichtung bei der Montage gewährleistet. Außerdem besteht bei der Materialwahl der Dichtung und des Bauteils ein größerer Spielraum, denn es muss keine Klebeverbindung zwischen der Dichtung und dem Bauteil durch das Anformen der Dichtung erfolgen. Eine formschlüssige Verbindung war dem Fachmann bei statischen Bauteilen mit statischen Dichtungen nicht bekannt. Der Fachmann wird formschlüssige Verbindungen zur Sicherung von statischen Dichtungen an statischen Bauteilen auch nicht in Erwägung gewogen haben, denn dem Fachmann war eine Klebeverbindung zur Verbindung einer statischen Dichtung an einem statischen Bauteil bekannt. Da zwischen statischen Dichtungen und statischen Bauteilen im Betrieb keine großen Kräfte wirken, werden stärkere Verbindungen als nicht notwendig erachtet.

Erfindungsgemäß kann das statische Bauteil einen Dichtungsmaterialkanal aufweisen, der sich von der Dichtung weg erstreckt und Dichtungsmaterial enthält, das mit der Dichtung einstückig verbunden ist.

Erfindungsgemäß kann das statische Bauteil mehrere und vorzugsweise zwei Dichtungsmaterialkanäle aufweisen, die sich von einer statischen Dichtung weg erstrecken und Dichtungsmaterial enthalten, das mit der statischen Dichtung einstückig verbunden ist.

Erfindungsgemäß können sich die Dichtungsmaterialkanäle in im wesentlichen entgegengesetzte Richtungen erstrecken.

Erfindungsgemäß können sich der bzw. die Dichtungsmaterialkanäle im wesentlichen und vorzugsweise vollständig innerhalb des statischen Bauteils erstrecken.

Erfindungsgemäß können sich der Dichtungsmaterialkanal bzw. zumindest einer oder einige der Dichtungsmaterialkanäle zumindest zu einer Seite des statischen Bauteils öffnen.

Wenn der Dichtungsmaterialkanal an einer Seite des statischen Bauteils endet, hat das den Vorteil, dass eine visuelle Kontrolle erfolgen kann, dass sich der Dichtungsmaterialkanal vollständig mit Dichtungsmaterial gefüllt hat, so dass die formschlüssige Befestigung der Dichtung an dem statischen Bauteil sicher gewährleistet ist.

Erfindungsgemäß können sich der Dichtungsmaterialkanal bzw. zumindest einer oder einige der Dichtungsmaterialkanäle von der Dichtung in das statische Bauteil erstrecken.

Erfindungsgemäß können sich der Dichtungsmaterialkanal bzw. zumindest einer oder einige der Dichtungsmaterialkanäle entlang der Oberfläche des statischen Bauteils erstrecken.

Erfindungsgemäß kann der sich entlang der Oberfläche des Bauteils erstreckende Dichtungsmaterialkanal unterhalb der Oberfläche des Bauteils verlaufen.

Erfindungsgemäß kann der sich entlang der Oberfläche des Bauteils erstreckende Dichtungsmaterialkanal zumindest teilweise bis zu der Oberfläche des statischen Bauteils erstrecken, wobei die Breite des Dichtungsmaterialkanals an der Oberfläche des statischen Bauteils kleiner als die größte Breite des Dichtungsmaterialkanals ist. Diese Ausführung hat den Vorteil, dass eine visuelle Kontrolle erfolgen kann, dass sich der Dichtungsmaterialkanal vollständig mit Dichtungsmaterial gefüllt hat, so dass die formschlüssige Befestigung der statischen Dichtung an dem statischen Bauteil sicher gewährleistet ist.

Erfindungsgemäß kann die Breite des Dichtungsmaterialkanals an der Oberfläche des statischen Bauteils weniger als 90%, vorzugsweise weniger als 70%, weiter vorzugsweise weniger als 50%, weiter vorzugsweise weniger als 30%, und bevorzugt ungefähr 10% der größten Breite des Dichtungsmaterialkanals betragen.

Erfindungsgemäß kann die Breite des Dichtungsmaterialkanals an der Oberfläche des statischen Bauteils mehr als 10%, vorzugsweise mehr als 20%, weiter vorzugsweise mehr als 30%, weiter vorzugsweise mehr als 40%, und bevorzugt ungefähr 50% der größten Breite des Dichtungsmaterialkanals betragen.

Zusätzlich können erfindungsgemäß drei angeformten Dichtungen vorhanden sein, wobei zumindest zwei der angeformten statischen Dichtungen auf gegenüberliegenden Seiten des statischen Bauteils angeordnet sein. Dabei können vorzugsweise die gegenüberliegenden Seiten parallel zueinander verlaufen.

Zusätzlich können erfindungsgemäß drei angeformten Dichtungen vorhanden sein, wobei zumindest zwei der angeformten statischen Dichtungen auf aneinandergrenzenden Seiten des statischen Bauteils angeordnet sein. Dabei können vorzugsweise die aneinandergrenzenden Seiten senkrecht zueinander angeordnet sein.

Erfindungsgemäß können die statische Dichtungen (jeweils) zumindest eine Fluidkanalöffnung des statischen Bauteils umschließen.

Erfindungsgemäß kann das statische Bauteil aus einem steifen harten Material bzw. Hartkunststoff ausgebildet sein, vorzugsweise aus einem harten Thermoplast bzw. technischen Thermoplast (z.B. PA, PBT, PPS, PEEK usw.), bevorzugt aus PEEK (Polyetheretherketon). Dabei können auch Füllstoffe (z.B. GF, GK, CF usw.) und/oder Verstärkungsfasern (z.B. Glasfasern, Kohlefasern usw.) vorgesehen werden.

Erfindungsgemäß kann das Dichtungsmaterial (der Dichtungen bzw. des Materials in den Dichtungsmaterialkanälen) aus einem duroplasten Elastomer ausgebildet sein, vorzugsweise aus einem Kautschuk, bevorzugt aus HNBR, NBR, EPDM. Dabei kann vorzugsweise das Dichtungsmaterial aus TPE, ACM, Silikon, Metall (beispielsweise Kupfer) oder Keramik ausgebildet sein.

Erfindungsgemäß können die statischen Dichtungen jeweils in einer Dichtungsnut, Vertiefung und/oder Aufnahme angeordnet sein.

Es gibt statische Dichtungen, die zwischen zwei Bauteilen angeordnet sind, die jeweils mindestens eine Fluidkanalöffnung aufweisen, die mit der jeweils anderen Fluidkanalöffnung zu verbinden sind und mit der statischen Dichtung abgedichtet werden sollen. Es gibt Fälle, bei denen die beiden Fluidkanalöffnungen versetzt zueinander sind und die Fluidverbindung zwischen den beiden Fluidkanalöffnungen durch einen zwischen den beiden zu verbindenden Bauteilen ausgebildeten und die statische Dichtung begrenzten Kanal gebildet wird. Da beispielsweise bei einem Unterdruck die Gefahr besteht, dass die statische Dichtung zusammengezogen wird und den zwischen den beiden Bauteilen gebildeten Kanal versperrt, kann man an dem die Dichtung bei der Montage aufnehmenden Teil Stege vorsehen, die ein seitlichen Verrutschen der Dichtung in dem Kanal durch Formschluß verhindern. Wenn man die statische Dichtung direkt an das Bauteil anformen will, besteht das Problem, dass die Abdichtung des Formwerkzeugs für die Dichtung an dem Bauteil an den der Fluidkanalöffnung zugewandten Enden der Stege schwierig ist.

Es besteht daher die Aufgabe, eine statische Dichtung anzugeben, die zur Abdichtung eines zwischen zwei Bauteilen ausgebildeten Kanals geeignet ist und gegen ein seitliches Verrutschen in den Kanal gesichert ist.

Diese Aufgabe der Erfindung wird mit einer statischen Dichtung gemäß den Merkmalen von Anspruch 24 gelöst. Vorteilhafte Ausgestaltungen der Erfindung sind in den abhängigen Ansprüchen angegeben.

Alternativ oder zusätzlich ist es auch möglich, die Stege zur Sicherung der statischen Dichtung an dem Bauteil vorzusehen, an das die statische Dichtung nicht angeformt wird. Alternativ oder zusätzlich kann die an dem Bauteil angeformte statische Dichtung formschlüssig an dem Bauteil gesichert sein, vorzugsweise gemäß den oben genannten vorteilhaften Ausgestaltungen der Erfindung betreffend das statische Bauteil mit der formschlüssig gesicherten angeformten statischen Dichtung.

Gemäß einer Ausführung der Erfindung wird eine statische Dichtung mit einem Dichtungsring zur Abdichtung zumindest einer Öffnung eines in einem ersten statischen Bauteil vorgesehenen Fluidkanals und zumindest einer damit zu verbindenden Öffnung eines in einem zweiten statischen Bauteil vorgesehenen Fluidkanals angegeben, wobei die statische Dichtung zumindest einen Versteifungssteg aufweist, der zwei Stellen des Dichtungsrings miteinander verbindet.

Die erfindungsgemäße Ausführung hat den Vorteil, dass der Versteifungssteg bzw. die Versteifungsstege ein Verengen der Dichtung verhindern, wenn beispielweise ein Unterdruck anliegt. Daher verringert sich der Strömungsquerschnitt nicht, und die Funktionsfähigkeit bleibt durch die erfindungsgemäße Dichtung gewährleistet.

Erfindungsgemäß kann die statische Dichtung mehrere Versteifungsstege aufweisen, die vorzugsweise im wesentlichen parallel zueinander verlaufen.

Erfindungsgemäß kann der bzw. können die Versteifungsstege einen im wesentlichen rechteckigen Querschnitt aufweisen.

Erfindungsgemäß können die Öffnungen der zu verbindenden Fluidkanale zueinander versetzt sein.

Erfindungsgemäß können die Öffnungen der zu verbindenden Fluidkanäle jeweils gegenüberliegenden Endabschnitten der statischen Dichtung zugeordnet sein.

Erfindungsgemäß kann der bzw. können der bzw. können die Versteifungsstege zwischen zwei Abschnitten der statischen Dichtung angeordnet sein, die jeweils einer Öffnung der zu verbindenden Fluidkanäle zugeordnet sind.

Erfindungsgemäß kann der bzw. können der bzw. können die Versteifungsstege im wesentlichen senkrecht zu einer gedachten Verbindungslinie zwischen den Öffnungen der zu verbindenden Fluidkanäle verlaufen.

Die statische Dichtung gemäß der Erfindung bzw. gemäß den vorteilhaften Ausgestaltungen kann auch bei einem erfindungsgemäßen statischen Bauteil gemäß der vorherigen Beschreibung bzw. den Ansprüchen 1 bis 23 bzw. dem Oberbegriff von Anspruch 1 verwendet werden.

Erfindungsgemäß kann der Dichtungsring der statischen Dichtung bzw. können die Dichtungsringe der statischen Dichtungen jeweils einen runden, ovalen, ellipsenförmigen, eiförmigen, rechteckigen, wellenförmigen, quadratischen und/oder krummlinigen Querschnitt aufweisen. Bei einem rechteckigen bzw. quadratischen Querschnitt sind die Ecken vorzugsweise abgerundet bzw. mit einem Radius versehen.

Erfindungsgemäß kann der Dichtungsring der statischen Dichtung bzw. können die Dichtungsringe der statischen Dichtungen jeweils eine runde, ovale, ellipsenförmige, eiförmige, rechteckige, wellenförmige, quadratischen und/oder krummlinige Form aufweisen. Bei der rechteckigen bzw. quadratischen Form sind die Ecken vorzugsweise abgerundet bzw. mit einem Radius versehen.

Erfindungsgemäß kann die Höhe des bzw. der Versteifungsstege mindestens 5% des Höhe der Dichtung, vorzugsweise mindestens 10% des Höhe der Dichtung, insbesondere vorzugsweise mindestens 20% des Höhe der Dichtung, und bevorzugt ungefähr 30% der Höhe der Dichtung,betragen.

Erfindungsgemäß kann die Höhe des bzw. der Versteifungsstege höchstens 70% des Höhe der Dichtung, vorzugsweise höchstens 50% des Höhe der Dichtung, insbesondere vorzugsweise höchstens 40% des Höhe der Dichtung, und bevorzugt ungefähr 30% der Höhe der Dichtung betragen.

Andere relative Höhen für die Versteifungsstege sind denkbar. Die Höhe ist so zu wählen, dass einerseits die Höhe der Versteifungsstege hinreichend groß ist, dass ein Verengen der Dichtung bzw. ein zu starkes Verengen der Dichtung verhindert wird, und dass andererseits die Höhe so klein ist, dass eine hinreichende Fluidströmung bei der zwischen den beiden statischen Bauteilen eingespannten Dichtung durch den zwischen den beiden statischen Bauteilen und der Dichtung gebildeten Fluidkanal gewährleistet ist. Die Obergrenze der Höhe ist auch von dem Elastizitätsmodul des Dichtungsmaterials bzw. dem Abstand zwischen den beiden statischen Bauteilen abhängig.

Erfindungsgemäß können die statische Dichtungen durch Spritzpressen (Transfer-Moulding) oder Spritzgießen (Injection-Moulding) angeformt werden. Diese Verfahren sind dem Fachmann bekannt. Beipsielsweise können dabei Umsetzverfahren, Mehrkomponentendrehwerkzeuge, Indexverfahren und/oder Schieberwerkzeuge eingesetzt werden.

Die Erfindung wird im folgenden anhand der in den Figuren gezeigten Ausführungsbeispiele näher beschrieben.
- Fig. 1: zeigt eine Querschnittsansicht eines statischen Bauteils gemäß einer ersten Ausführung der Erfindung entlang der Linie I-I von Fig. 2.
- Fig. 2: zeigt eine Aufsicht des statischen Bauteils von Fig. 1.
- Fig. 3: zeigt eine perspektivische Ansicht des statischen Bauteils von Fig. 1.
- Fig. 4: zeigt eine Querschnittsansicht eines statischen Bauteils gemäß einer zweiten Ausführung der Erfindung entlang der Linie IV-IV von Fig. 5.
- Fig. 5: zeigt eine Aufsicht des statischen Bauteils von Fig. 4.
- Fig. 6: zeigt eine perspektivische Ansicht des statischen Bauteils von Fig. 4.
- Fig. 7A: zeigt eine Querschnittsansicht eines statischen Bauteils gemäß einer dritten Ausführung der Erfindung entlang der Linie VIIA-VIIA von Fig. 8.
- Fig. 7B: zeigt eine Querschnittsansicht des statischen Bauteils von Fig. 7A entlang der Linie VIIB-VIIB von Fig. 8.
- Fig. 7C: zeigt eine Querschnittsansicht des statischen Bauteils von Fig. 7A entlang der Linie VIIC-VIIC von Fig. 8.
- Fig. 8: zeigt eine Aufsicht des statischen Bauteils von Fig. 7A.
- Fig. 9A: zeigt eine perspektivische Ansicht des statischen Bauteils von Fig. 7A schräg von oben.
- Fig. 9B: zeigt eine perspektivische Ansicht des statischen Bauteils von Fig. 7A schräg von unten.
- Fig. 10A: zeigt eine Querschnittsansicht eines statischen Bauteils gemäß einer vierten Ausführung der Erfindung entlang der Linie XA-XA von Fig. 11.
- Fig. 10B: zeigt eine Querschnittsansicht des statischen Bauteils von Fig. 10A entlang der Linie XB-XB von Fig. 11.
- Fig. 11: zeigt eine Aufsicht des statischen Bauteils von Fig. 10A.
- Fig. 12A: zeigt eine perspektivische Ansicht des statischen Bauteils von Fig. 10A schräg von unten.
- Fig. 12B: zeigt eine perspektivische Ansicht des statischen Bauteils von Fig. 10A schräg von oben. zeigen Varianten der Querschnittsform eines Dichtungsmaterialkanals für ein erfindungsgemäßes statisches Bauteil.
- Fig. 14: zeigt eine Aufsicht eines erfindungsgemäßen Dichtungselements für ein Bauteil gemäß einer weiteren Ausführung der Erfindung.
- Fig. 15: zeigt einen Querschnittsansicht des Dichtungselements von Fig. 14 entlang der Linie XV-XV von Fig. 14.

In der Beschreibung des Ausführungsbeispiels werden folgende Bezugszeichen verwendet:
- 10: statisches Bauteil
- 11, 12: Fluidkanal
- 13, 14, 15: Dichtungsmaterialkanal
- 16: Stufe
- 20: Dichtungsmaterial
- 21, 22: statische Dichtung
- 23, 24, 25: Dichtungsmaterialsteg
- 1026: Versteifungssteg

- 1026: Versteifungssteg
- 1027: Versteifungssteg
- 1028A: Dichtungsabschnitt
- 1028B: Dichtungsabschnitt
- 1028C: Dichtungsabschnitt
- 1031: Fluidkanal
- 1032: Fluidkanal

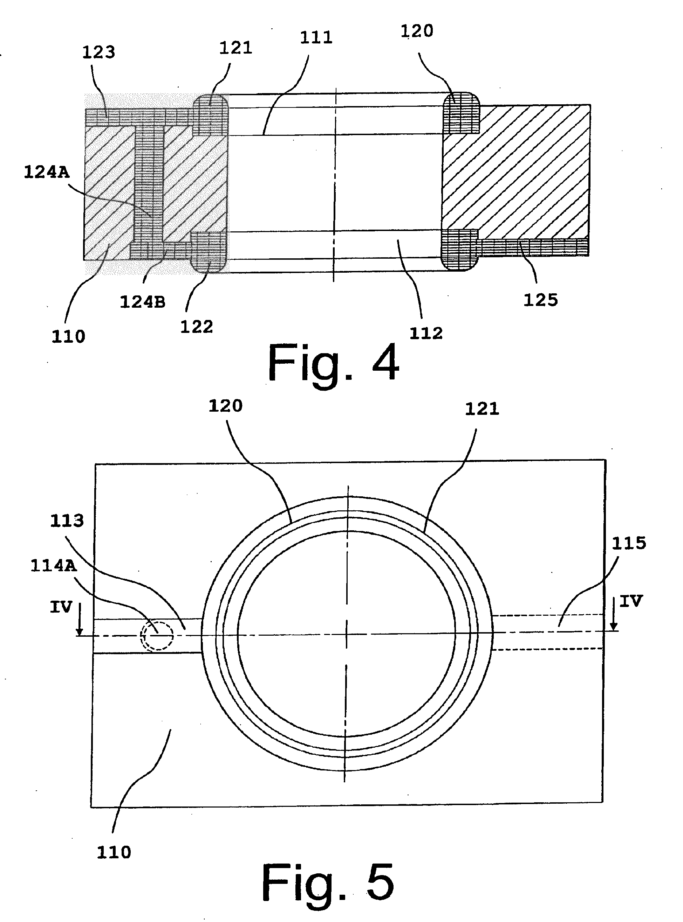

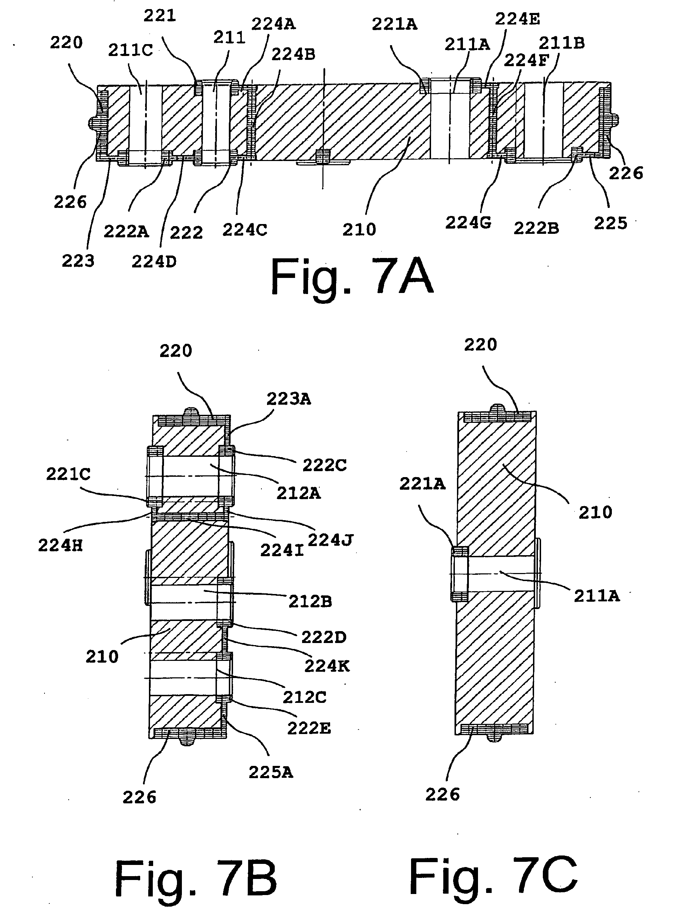

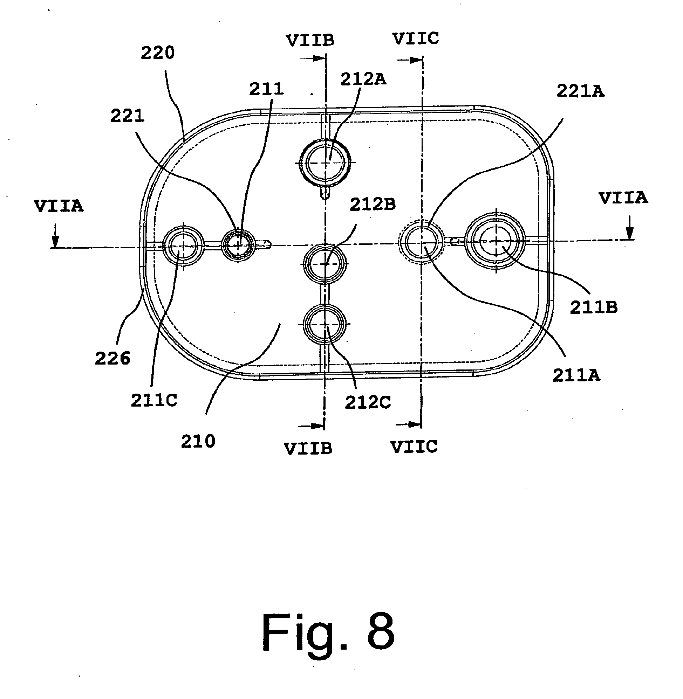

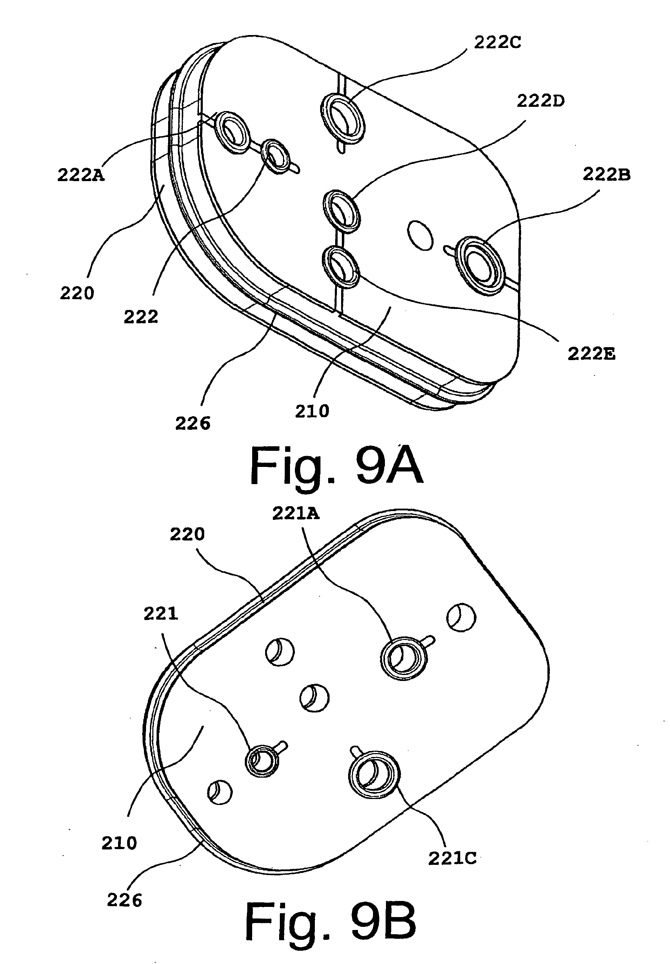

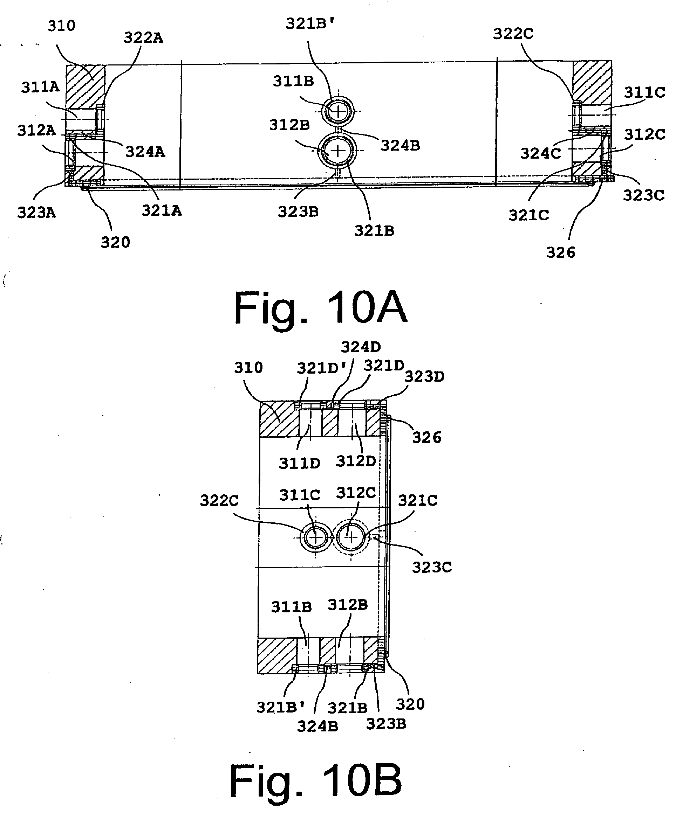

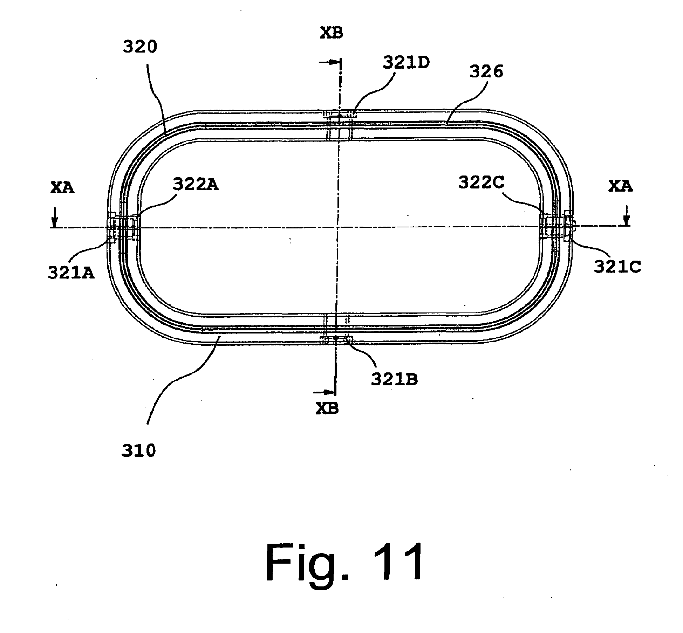

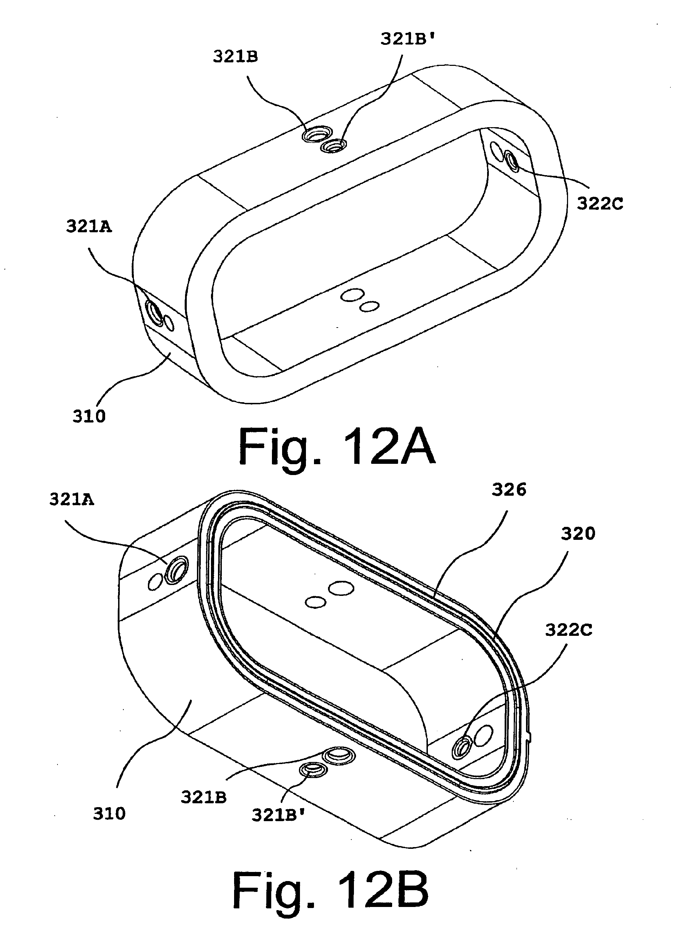

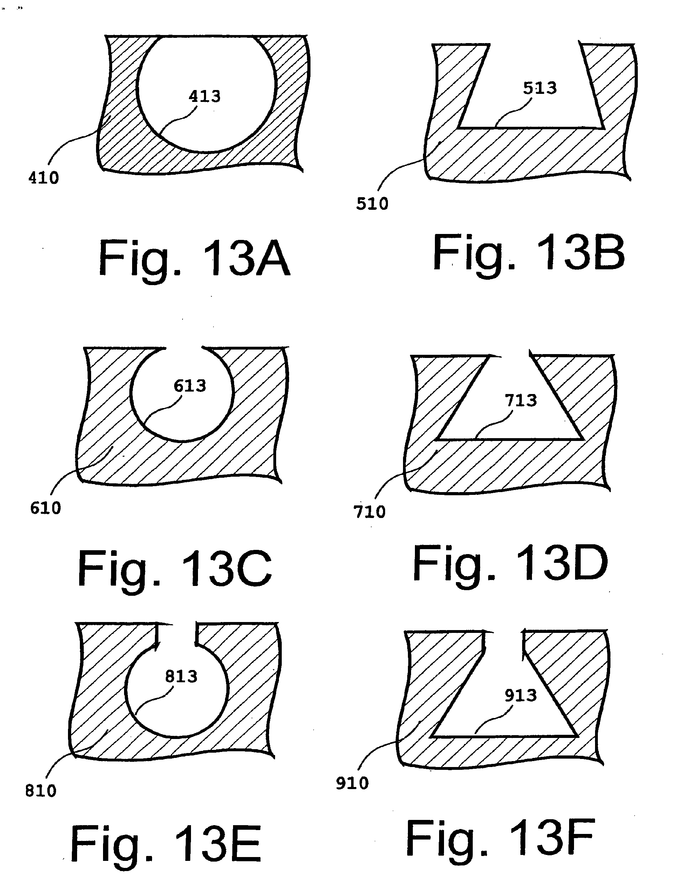

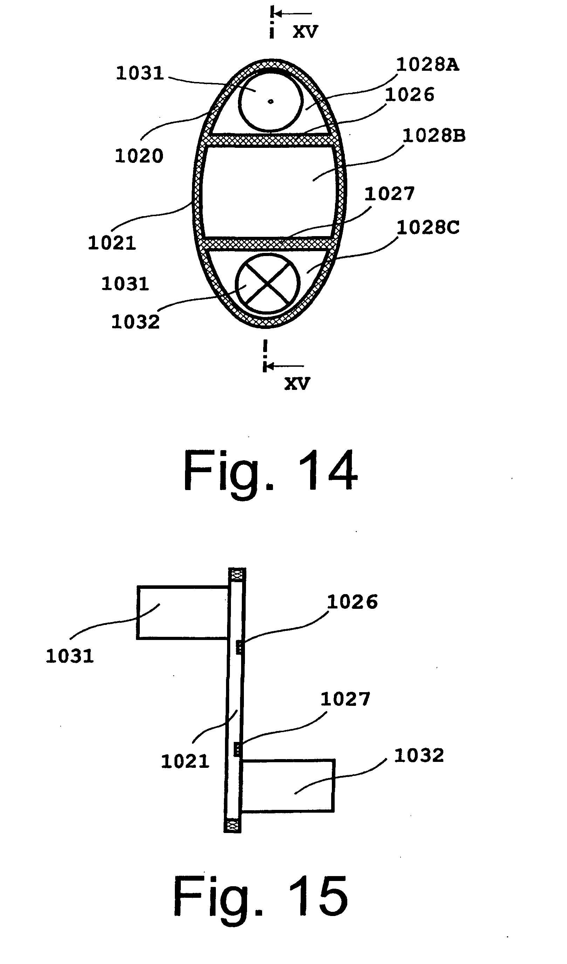

Bei den weiteren Ausführungsbeispielen werden für entsprechende Merkmale und Elemente, soweit nicht explizit aufgeführt, die gleichen (eventuell mit Zusätzen A, B, etc.) aber um jeweils 100 (Figuren 4 bis 6), 200 (Figuren 7A bis 9B), 300 (Figuren 10A bis 12B), 400 (Fig. 13A), 500 (Fig. 13B), 600 (Fig. 13C), 700 (Fig. 13D), 800 (Fig. 13E), 900 (Fig. 13F) bzw. 1000 (Figuren 14 bis 15) erhöhte Bezugszeichen verwendet.

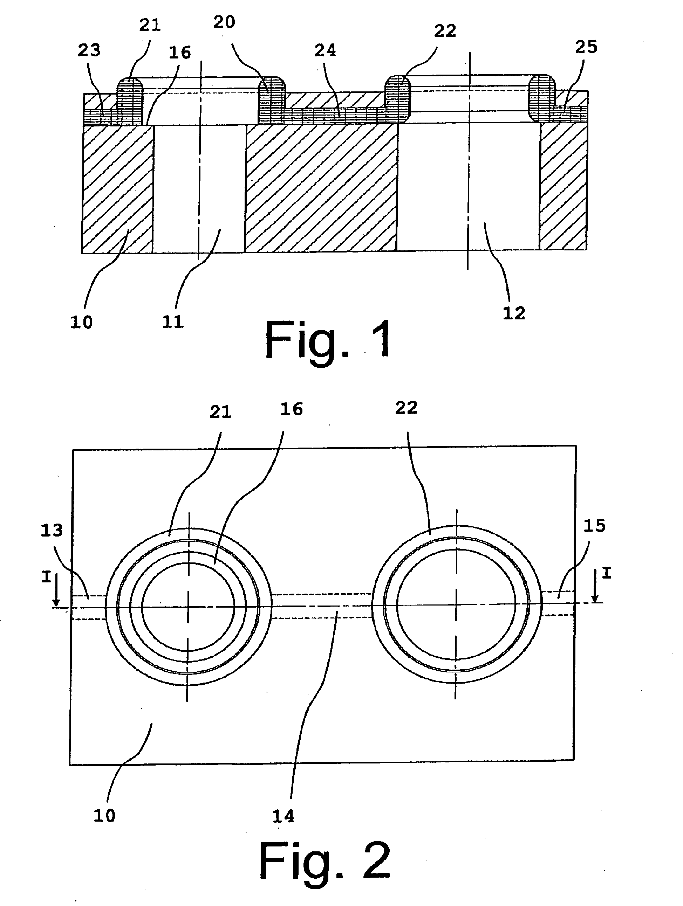

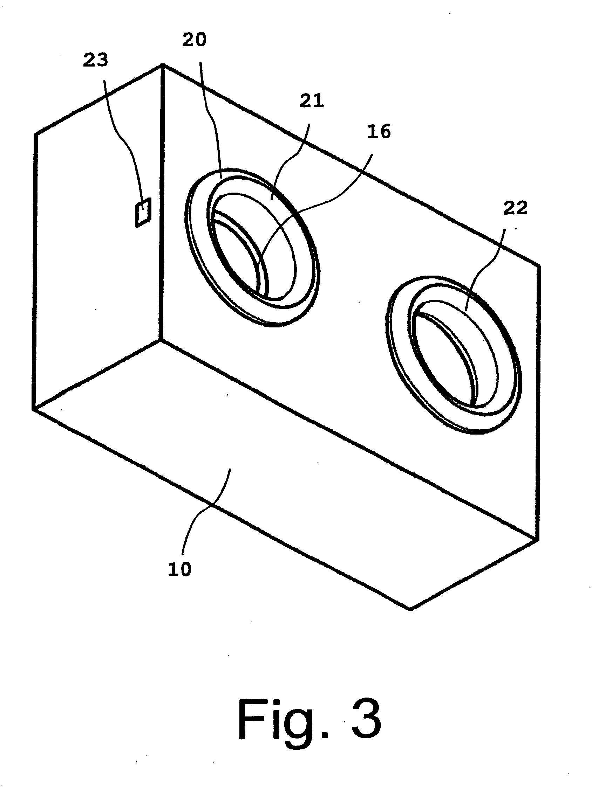

Die Figuren 1 bis 3 zeigen ein statisches Bauteil 10 gemäß einer ersten Ausführung der Erfindung.

Das statische Bauteil 10 weist zwei Fluidkanäle 11, 12 auf. Auf der oberen Seite des statischen Bauteils 10 ist Dichtungsmaterial 20 vorgesehen, mittels dem zwei statische Dichtungen 21, 22 ausgebildet sind, die zur Abdichtung jeweils einer der oberen Öffnungen der beiden Fluidkanäle vorgesehen sind. Die Abdichtung erfolgt, wenn das statische Bauteil mittels nicht dargestellter Verbindungsmittel mit einem weiteren Bauteil verbunden wird. Beispielsweise kann das statische Bauteil gegen ein weiteres Bauteil (nicht gezeigt) verspannt werden. Andere dem Fachmann bekannte Verbindungsmittel sind denkbar.

Auf der anderen Seite kann ebenfalls Dichtungsmaterial vorgesehen sein, das entsprechend der Oberseite statische Dichtungen um die jeweiligen unteren Fluidkanalöffnungen ausbildet. Die Unterseite ist nur schematisch dargestellt.

Beispielsweise können auf der Ober- und/oder Unterseite andere dem Fachmann bekannte Anschlussmittel zur Verbindung von separaten Leitungen (nicht gezeigt) oder in einem weiteren Bauteil integrierten Leitungen (nicht gezeigt) mit den Fluidkanälen vorgesehen werden.

In dem statischen Bauteil erstreckt sich seitlich von der Dichtung 21 unterhalb der Oberfläche des statischen Bauteils 10 ein Dichtungsmaterialkanal 13, der an der Seite des Bauteils endet. Der Dichtungsmaterialkanal 13 ist mit einem Dichtungsmaterialsteg 23 gefüllt, der einstückig mit der Dichtung 21 verbunden ist.

Entsprechend ist auf der anderen Seite ein Dichtungsmaterialkanal 15 vorgesehen, der einen Dichtungsmaterialsteg 25 aufnimmt, der mit der Dichtung 22 einstückig verbunden ist.

Es ergibt sich der Vorteil, dass eine visuelle Kontrolle erfolgen kann, dass der Dichtungsmaterialsteg 23 bzw. 25 vollständig gebildet ist, wenn an der Seite des Bauteils 10 am Ende des Dichtungsmaterialkanals 13 bzw. 25 Dichtungsmaterial 20 zu sehen ist.

Zwischen den beiden Dichtungen 21, 22 ist ein Dichtungsmaterialkanal 14 vorgesehen, der einen Dichtungsmaterialsteg 24 aufnimmt, der mit den beiden Dichtungen 21, 22 an jeweils einem Ende einstückig verbunden ist.

Bei der Dichtung 21 ist eine Stufe 16 vorgesehen, während die Dichtung 22 über den Rand der Öffnung des Fluidkanals 12 vorsteht. Selbstverständlich können die beiden Fluidkanäle jeweils mit oder ohne Stufe ausgebildet sein.

Bei dem in den Figuren 1 bis 3 gezeigten Ausführungebeispiel sind die auf der einen Seite des statischen Bauteils 10 vorgesehenen statischen Dichtungen 21, 22 durch die drei Dichtungsmaterialstege 23, 24, 25, die in den jeweilgen Dichtungsmaterialkanälen 13, 14, 15 angeordnet sind, formschlüssig in dem statischen Bauteil gesichert. Eine visuelle Kontrolle der richtigen Anordnung des Dichtungsmaterials kann durch Kontrolle der Enden der Dichtungsmaterialstege 23 bzw. 25 erfolgen.

Die Figuren 4 bis 6 zeigen ein statisches Bauteil 110 gemäß einer zweiten Ausführung der Erfindung.

Auf der ersten Ausführung entsprechende Komponenten wird mit um 100 erhöhten Bezugszeichen Bezug genommen. In Ergänzung zu der folgenden Beschreibung wird auf die obige Beschreibung der ersten Ausführung der Erfindung verwiesen.

Das statische Bauteil 110 weist einen Fluidkanal 111 auf. Auf der oberen und unteren Seite des statischen Bauteils 110 ist Dichtungsmaterial 20 vorgesehen, mittels dem zwei statische Dichtungen 21, 22 ausgebildet sind, die zur Abdichtung jeweils einer Öffnung des Fluidkanals 111 vorgesehen sind. Die Abdichtung erfolgt, wenn das statische Bauteil mittels nicht dargestellter Verbindungsmittel mit jeweils einem weiteren Bauteil verbunden wird. Beispielsweise kann das statische Bauteil 110 auf beiden Seiten gegen weitere Bauteile (nicht gezeigt) verspannt werden. Andere dem Fachmann bekannte Verbindungsmittel sind denkbar.

Beispielsweise können auf der Ober- und/oder Unterseite andere dem Fachmann bekannte Anschlussmittel zur Verbindung von separaten Leitungen (nicht gezeigt) oder in einem weiteren Bauteil integrierten Leitungen (nicht gezeigt) mit den Fluidkanälen vorgesehen werden.

In dem statischen Bauteil erstreckt sich seitlich von der Dichtung 121 an der Oberfläche des statischen Bauteils 110 ein Dichtungsmaterialkanal 113, der an der Seite des Bauteils endet. Der Dichtungsmaterialkanal 113 ist mit einem Dichtungsmaterialsteg 123 gefüllt, der einstückig mit der Dichtung 121 verbunden ist.

In dem statischen Bauteil erstreckt sich seitlich von der Dichtung 122 an der Oberfläche ein Dichtungsmaterialkanal 113, der an der Seite des Bauteils endet. Der Dichtungsmaterialkanal 113 ist mit einem Dichtungsmaterialsteg 123 gefüllt, der einstückig mit der Dichtung 121 verbunden ist.

Auf der anderen Seite des statischen Bauteils 110 ist ein Dichtungsmaterialkanal 115 vorgesehen, der einen Dichtungsmaterialsteg 125 aufnimmt, der mit der Dichtung 122 einstückig verbunden ist. Bei der dargestellten Ausführung verläuft der Dichtungsmaterialsteg 125 in die entgegengesetzte Richtung zu dem Dichtungsmaterialsteg 123.

Von der Oberseite des statischen Bauteils 110 zu der Unterseite des statischen Bauteils 110 verläuft ein Dichtungsmaterialkanal 114A, der in einen Dichtungsmaterialkanal 114B übergeht, der parallel zu dem Dichtungsmaterialkanal 113 verläuft. In den Dichtungsmaterialkanälen 114A und 114B sind Dichtungsmaterialstege 124A, 124B vorgesehen, die den Dichtungsmaterialsteg 123 mit der Dichtung 122 einstückig verbinden. Durch die einstückige Verbindung der Dichtung 121 mit der Dichtung 122 (Dichtungsmaterialstege 123, 124A und 124B) erfolgt eine formschlüssige Sicherung der beiden miteinander über die Dichtungsmaterialstege 123, 124A und 124B verbundenen statischen Dichtungen 121 und 122 an dem statischen Bauteil 110.

Der Dichtungsmaterialkanal 124A bzw. der Dichtungsmaterialsteg 124 weist einen runden Querschnitt auf. Andere dem Fachmann geläufige Querschnittsformen sind denkbar. Beispielsweise kann der Querschnitt krummlinig, eiförmig, oval, ellipsenförmig oder rechteckig sein.

Es ist klar, dass sich der Dichtungsmaterialsteg 123 und der entsprechende Dichtungsmaterialkanal 113 nur bis zu dem Dichtungsmaterialsteg 124A erstrecken kann. Weiterhin können beispielsweise der Dichtungsmaterialsteg 125 und der entsprechende Dichtungsmaterialkanal 115 weggelassen werden.

Bei dem Fluidkanal 111 und den Dichtungen 121 bzw. 122 sind die Abmessungen derart gewählt, dass die statischen Dichtungen 121 bzw. 122 an ihrer Innenseite bündig mit dem Fluidkanal 111 abschließen. Selbstverständlich kann entsprechend der ersten Ausführung der Erfindung auch eine Stufe oder ein Rücksprung an der Ober- und/oder Unterseite des statischen Bauteils 110 vorgesehen werden.

Bei der zweiten Ausführung der Erfindung ergibt sich wie bei der ersten Ausführung der Erfindung der Vorteil, dass eine visuelle Kontrolle erfolgen kann, dass der Dichtungsmaterialsteg 123 bzw. 125 vollständig ausgebildet ist, wenn entlang des Verlaufs des Dichtungsmaterialkanals 113 bzw. 115 an der Oberfläche des Bauteils 110 Dichtungsmaterial 120 zu sehen ist.

Bei der in den Figuren 4 bis 6 gezeigten Ausführung der Erfindung ist die Querschnittsform der Dichtungsmaterialkanäle 113, 114B bzw. 115 bzw. der Dichtungsmaterialstege 123, 124B bzw. 125 im wesentlichen trapezförmig. Alternative Querschnittsformen sind denkbar. Vorzugsweise ist die Querschnittsform derart gewählt, dass ein Formschluss zwischen dem Dichtungsmaterial 120 und dem statischen Bauteil 110 (zusätzlich zu dem Formschluss durch den Dichtungsmaterialsteg 124A) erfolgt. Beispielsweise kann eine oder mehrere der Querschnittsformen entsprechend der in den Figuren 13A bis 13F gezeigten Varianten für eine mögliche Querschnittsform eines an der Oberfläche des statischen Bauteils verlaufenden Dichtungsmaterialkanals für erfindungsgemäße statische Bauteile ausgebildet sein.

Gemäß Fig. 13A bzw. 13C kann der Querschnitt eines an der Oberfläche eines statischen Bauteils 410 bzw. 610 verlaufenden Dichtungsmaterialkanals 413 bzw. 613 im wesentlichen kreissegmentförmig sein.

Gemäß Fig. 13B bzw. 13D kann der Querschnitt eines an der Oberfläche eines statischen Bauteils 510 bzw. 710 verlaufenden Dichtungsmaterialkanals 513 bzw. 713 im wesentlichen trapezförmig sein, derart, dass die kleine Seite an der Oberfläche angeordnet ist.

Bei den Ausführungen gemäß Fig. 13C oder 13D erfolgt ein stärkerer Formschluss, weil die Öffnung des Dichtungsmaterialkanals 613 bzw. 713 wesentlich kleiner als der größte Durchmesser des Dichtungsmaterialkanals 613 bzw. 713 ist.

Gemäß Fig. 13E bzw. 13F kann der Querschnitt eines an der Oberfläche eines statischen Bauteils 810 bzw. 910 verlaufenden Dichtungsmaterialkanals 813 bzw. 913 entsprechend der Ausführungen der Fig. 13A bis 13D mit einem im wesentlichen rechteckigen sich bis zur Oberfläche erstreckenden Fortsatz sein.

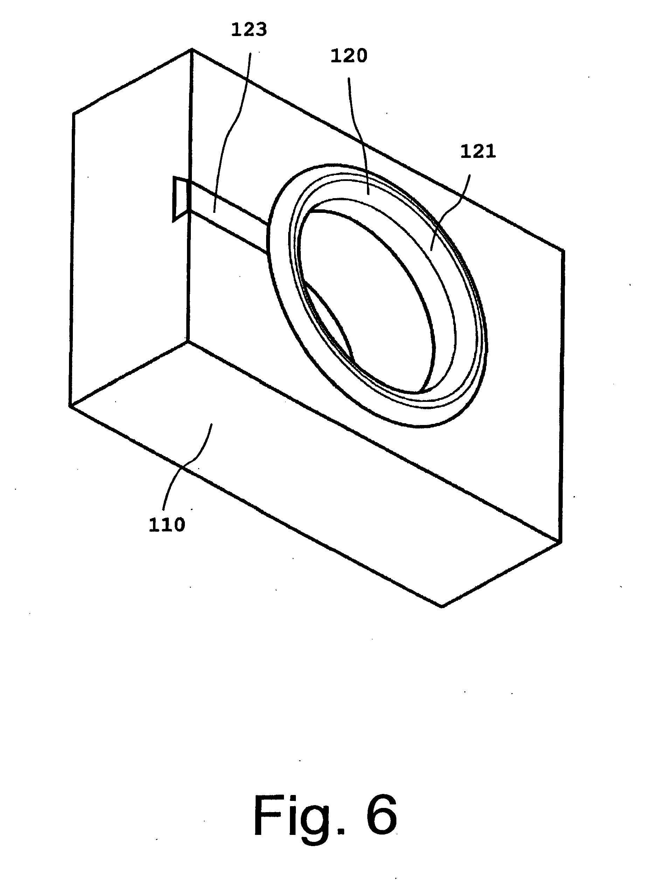

Alternativ zu der in Fig. 6 gezeigten Querschnittsform könnte auch eine andere Querschnittsform gewählt werden, die keinen Formschluss bewirkt, solange der Formschluss durch zumindest einen anderen Dichtungsmaterialsteg gewährleistet ist, wie beispielsweise die einstückige Verbindung der an gegenüberliegenden Seiten des statischen Bauteils angeordneten Dichtungen 121 und 122 durch die Dichtungsmaterialstege 123, 124A und 124B.

Um eine noch stärkere Sicherung durch Formschluss zu erhalten, ist es denkbar, die beiden Dichtungen 121 und 122 zusätzlich durch eine oder mehrere weitere Dichtungsmaterialstegverbindungen einstückig miteinander zu verbinden. Diese können vorzugsweise der Dichtungsmaterialstegverbindung durch die Dichtungsmaterialstege 123, 124A und 124B im wesentlichen entsprechen.

Alternative formschlüssige Verbindungen Sicherungen sind denkbar. Beispielsweise könnte innerhalb des statischen Bauteils ein Dichtungsmaterialring vorgesehen sein, der über einen oder vorzugsweise mehrere Dichtungsmaterialstege mit einer formschlüssig zu sicherenden Dichtung einstückig verbunden ist. Mit diesem innerhalb des statischen Bauteils vorgesehenen Dichtungsmaterialring könnten beispielsweise an gegenüberliegenden Seiten des statischen Bauteils auch mehrere Dichtungen über entsprechende Dichtungsmaterialstege einstückig verbunden sein. Bei der Ausführung der Figuren 4 bis 6 könnte der Dichtungsmaterialring beispielsweise zwischen den beiden Dichtungen 121 und 122 vorgesehen werden, und mit beiden Dichtungen über entsprechende Dichtungsmaterialstege verbunden sein. Beispielsweise könnte eine Dichtung in einem statischen Bauteil auch durch einen oder mehrere Dichtungsmaterialstege formschlüssig gesichert sein, der bzw. die von einer Stelle der Dichtung in das statische Bauteil hinein zu einer anderen Stelle der Dichtung verläuft bzw. verlaufen.

Wie bei den gezeigten Ausführungen ist es auch bei den alternativen Ausführungen fertigungstechnisch vorteilhaft, die Dichtungsmaterialstege jeweils seitlich in eine Dichtung münden zu lassen, damit bei dem Anformen der Dichtung an das statische Bauteil eine gute Ausbildung der Dichtung an dem statischen Bauteil gewährleistet ist.

Alle oben genannten Alternativen gelten selbstverständlich für alle in dieser Beschreibung genannten Ausführungen der Erfindung. Es liegt in der Fertigkeit des Durchschnittsfachmanns, die explizit gezeigten Ausführungen der Erfindung entsprechend auszubilden und gegebenenfalls anzupassen.

Die Figuren 7A bis 9B zeigen ein statisches Bauteil 210 gemäß einer dritten Ausführung der Erfindung.

Auf der ersten oder zweiten Ausführung entsprechende Komponenten wird mit um 200 bzw. 100 erhöhten Bezugszeichen Bezug genommen. In Ergänzung zu der folgenden Beschreibung wird auf die obige Beschreibung der ersten bzw. zweiten Ausführung der Erfindung verwiesen.

Das statische Bauteil 210 weist mehrere Fluidkanäle 211, 211A, 211B, 211C, 212A, 212B und 212C auf. Statische Dichtungen 221, 221A und 221C sind auf der einen Seite des statischen Bauteils vorgesehen. Auf der anderen Seite des statischen Bauteils sind mehrere statische Dichtungen 222, 222A, 222B, 222C, 222D und 222E vorgesehen.

Entsprechend der ersten Ausführung sind die statischen Dichtungen 222 und 222A mittels eines Dichtungsmaterialstegs 224D und die Dichtungen 222D und 222E mittels eines Dichtungsmaterialstegs 224K jeweils einstückig miteinander verbunden. Im Gegensatz zu der ersten Ausführung verlaufen die Dichtungsmaterialstege 224D und 224K nicht unterhalb der Oberfläche. Selbstverständlich können die Dichtungsmaterialstege 224D und/oder 224K auch unterhalb der Oberfläche verlaufen. Weiterhin können sie vorteilhafterweise einen Querschnitt entsprechend einer der Figuren 6 bzw. 13A bis 13F oder einen anderen entsprechenden Querschnitt aufweisen, der eine formschlüssige Verbindung des Dichtungsmaterials und damit der statischen Dichtungen mit dem statischen Bauteil 210 schafft.

Entsprechend der zweiten Ausführung sind die statischen Dichtungen 221 und 222 über die Dichtungsmaterialstege 224A, 224B und 224C und die statischen Dichtungen 221C und 222C über die Dichtungsmaterialstege 224H, 224I und 224J jeweils einstückig miteinander verbunden.

Um das statische Bauteil 210 verläuft eine umlaufende Dichtung 226, die über den Dichtungsmaterialsteg 223 mit der Dichtung 222A, über den Dichtungsmaterialsteg 225 mit der Dichtung 222B, über den Dichtungsmaterialsteg 223A mit der Dichtung 222C und über den Dichtungsmaterialsteg 225A mit der Dichtung 222E einstückig verbunden ist. Die Dichtungsmaterialstege 223, 223A, 225 und/oder 225a können die oben genannten Querschnittsformen aufweisen und/oder unterhalb der Oberfläche verlaufen.

Insgesamt ergibt sich eine fromschlüssige Verbindung des Dichtungsmaterials mit dem statischen Bauteil. Zusätzlich kann wie bei allen Ausführungen der Erfindung durch die Anformung eine Haftwirkung bereitgestellt werden.

Die Figuren 10A bis 12B zeigen ein statisches Bauteil 310 gemäß einer vierten Ausführung der Erfindung.

Im Gegensatz zu den vorherigen drei Ausführungsbeispielen ist das statische Bauteil 310 ringförmig ausgebildet, wobei die Fluidkanäle durch die Ringwandung hindurch verlaufen.

Auf der ersten, zweiten oder dritten Ausführung entsprechende Komponenten wird mit um 300, 200 bzw. 100 erhöhten Bezugszeichen Bezug genommen. In Ergänzung zu der folgenden Beschreibung wird auf die obige Beschreibung der ersten, zweiten bzw. dritten Ausführung der Erfindung verwiesen.

Das statische Bauteil 310 weist mehrere Fluidkanäle 311A, 312A, 311B, 312B, 311C, 312C, 311D und 312D auf. Die Fluidkanäle sind jeweils paarweise über den Ring des statischen Bauteils im wesentlichen gleichmäßig verteilt. Bei den vier Paaren ergibt sich ein Winkelabstand zwischen benachbarten Paaren von etwa 90°.

Statische Dichtungen 321A, 321B, 321B', 321C, 321D und 321D' sind auf der Aussenseite des Rings des statischen Bauteils an den Öffnungen der entsprechenden Fluidkanäle 312A, 312B, 311B, 312C, 312B bzw. 311B vorgesehen. Auf der Innenseite des Rings des statischen Bauteils 310 sind statische Dichtungen 322A und 322C an den Öffnungen der entsprechenden Fluidkanäle 311A bzw. 311C vorgesehen.

Entsprechend der ersten Ausführung sind die statischen Dichtungen 321B und 321B' mittels eines Dichtungsmaterialstegs 324B und die Dichtungen 321D und 321D' mittels eines Dichtungsmaterialstegs 324D jeweils einstückig miteinander verbunden. Entsprechend der ersten Ausführung verlaufen die Dichtungsmaterialstege 324B und 324D unterhalb der Oberfläche. Selbstverständlich können die Dichtungsmaterialstege 324B und/oder 324D auch an der Oberfläche verlaufen. Vorzugsweise haben sie dann einen Querschnitt, der eine formschlüssige Verbindung zwischen dem Dichtungsmaterialsteg und dem statischen Bauteil schafft. Beispielsweise können sie einen Querschnitt entsprechend einer der Figuren 6 bzw. 13A bis 13F oder einen anderen entsprechenden Querschnitt aufweisen, der eine formschlüssige Verbindung des Dichtungsmaterials und damit der statischen Dichtungen mit dem statischen Bauteil 310 schafft.

Entsprechend der zweiten Ausführung sind die statischen Dichtungen 321A und 322A bzw. 321C und 322C über jeweils einen Dichtungsmaterialsteg 324A bzw. 324C jeweils einstückig miteinander verbunden.

Auf der Unterseite des Ring des statischen Bauteils 310 verläuft eine umlaufende Dichtung 326, die über den Dichtungsmaterialsteg 323A mit der Dichtung 321A, über den Dichtungsmaterialsteg 323B mit der Dichtung 321B, über den Dichtungsmaterialsteg 323C mit der Dichtung 321C und über den Dichtungsmaterialsteg 323D mit der Dichtung 312D einstückig verbunden ist. Die Dichtungsmaterialstege 323A, 323B, 323C und 323D verlaufen unterhalb der Oberfläche des statischen Bauteils 310. Die Dichtungsmaterialstege 323A, 323B, 323C und/oder 323D können auch an der Oberfläche verlaufen und eine Querschnittsform aufweisen, die eine formschlüssige Verbindung zwischen dem Dichtungsmaterialsteg und dem statischen Bauteil schafft. Beispeilsweise können sie die oben genannten Querschnittsformen der Figuren 6 bzw. 13A bis 13F aufweisen und/oder unterhalb der Oberfläche verlaufen.

Insgesamt ergibt sich eine fromschlüssige Verbindung des Dichtungsmaterials mit dem statischen Bauteil. Zusätzlich kann wie bei allen Ausführungen der Erfindung durch die Anformung eine Haftwirkung bereitgestellt werden.

Die Figuren 14 und 15 zeigen eine Aufsicht bzw. eine Querschnittsansicht eines erfindungsgemäßen statischen Dichtungselements für ein statisches Bauteil gemäß der Erfindung.

Die statische Dichtung 1021 ist aus Dichtungsmaterial ausgebildet und weist einen umlaufenden Dichtungsring auf. Die statische Dichtung 1021 weist einen Dichtungsabschnitt 1028A auf, in dem eine Öffnung eines Fluidkanals 1031 angeordnet ist, der in einem ersten statischen Bauteil verläuft. Auf der gegenüberliegenden Seite weist die statische Dichtung 1021 einen Dichtungsabschnitt 1028C auf, in dem eine Öffnung eines Fluidkanals 1032 angeordnet ist, der in einem zweiten statischen Bauteil verläuft. Die beiden statischen Bauteile sind der Übersicht halber nicht dargestellt und die Fluidkanäle sind nur schematisch angedeutet. Es ist klar, dass auch jeweils mehrere Fluidkanäle vorgesehen sein können. Die Fluidkanäle sind zu einander versetzt, so dass die Dichtung 1021 zwischen den beiden statischen Bauteilen einen Fluidkanal zur Verbindung der Öffnungen der beiden Fluidkanäle 1031, 1032 bildet. Dieser Verbindungskanal ist in einem Dichtungsabschnitt 1028B gebildet.

Damit ein Verengen des Dichtungsabschnitts 1028B und somit des die Öffnungen der Fluidkanäle 1031, 1032 verbindenden Fluidkanals verhindert wird, sind zwei Versteifungsstege 1026, 1027 vorgesehen. Die beiden Versteifungsstege haben einen im wesentlichen rechteckigen Querschnitt. Selbstverständlich können auch andere dem Fachmann bekannte Querschnittsformen verwendet werden.

Die Höhe der Versteifungsstege 1026, 1027 beträgt ungefähr ein Viertel bzw. 30% der Höhe des Dichtungsrings. Bevorzugte Grenzen sind in den Ansprüchen und der Beschreibung angegeben. Anstelle einer Relation der Höhe der Versteifungsstege zu der Höhe der Dichtung kann auch eine Relation zu dem Abstand zwischen den beiden statischen Bauteilen angegeben werden. Ein bevorzugter Wert für die Höhe der Versteifungsstege beträgt beispielsweise ungefähr 30% der Höhe der Dichtung. Das kann beispielsweise etwa 50% des Abstands zwischen den beiden statischen Bauteilen entsprechen.

## Patentansprüche

1. Statisches Bauteil (10) mit zumindest zwei angeformten statischen Dichtungen (21, 22), wobei das statische Bauteil (10) und die angeformte statische Dichtung (21, 22) derart ausgebildet sind, dass die angeformte statische Dichtung (21, 22) formschlüssig an dem statischen Bauteil (10) befestigt ist, wobei die zumindest zwei angeformten statischen Dichtungen (21, 22) durch zumindest einen Dichtungsmaterialkanal (13, 14, 15) oder mehrere Dichtungsmaterialkanäle (13, 14, 15) miteinander verbunden sind,
**wobei** zumindest zwei der angeformten statischen Dichtungen (21, 22) auf der gleichen Seite des statischen Bauteils (10) angeordnet sind.

2. Statisches Bauteil (10) nach Anspruch 1, wobei sich der Dichtungsmaterialkanal (13, 14, 15) bzw. zumindest einer oder einige der Dichtungsmaterialkanäle (13, 14, 15) entlang der Oberfläche des statischen Bauteils (10) erstrecken.

3. Statisches Bauteil (10) nach Anspruch 2, wobei der sich entlang der Oberfläche des statischen Bauteils (10) erstreckende Dichtungsmaterialkanal (13, 14, 15) unterhalb der Oberfläche des statischen Bauteils (10) verläuft bzw. zumindest einer oder einige der sich entlang der Oberfläche des statischen Bauteils (10) erstreckenden Dichtungsmaterialkanäle (13, 14, 15) unterhalb der Oberfläche des statischen Bauteils (10) verlaufen.

4. Statisches Bauteil (10) nach einem der vorhergehenden Ansprüche, wobei sich der Dichtungsmaterialkanal (13, 14, 15) bzw. zumindest einer der Dichtungsmaterialkanäle (13, 14, 15) von der Dichtung (21, 22) weg erstreckt und Dichtungsmaterial (20) enthält, das mit der statischen Dichtung (21, 22) einstückig verbunden ist.

5. Statisches Bauteil (10) nach einem der vorhergehenden Ansprüche, wobei das statische Bauteil (10) mehrere und vorzugsweise zwei Dichtungsmaterialkanäle (13, 14, 15) aufweist, die sich von einer statischen Dichtung (21, 22) weg erstrecken und Dichtungsmaterial (20) enthalten, das mit der statischen Dichtung (21, 22) einstückig verbunden ist.

6. Statisches Bauteil (10) nach Anspruch 5, wobei sich die Dichtungsmaterialkanäle (13, 14, 15) in im wesentlichen entgegengesetzte Richtungen erstrecken.

7. Statisches Bauteil (10) nach einem der Ansprüche 4 bis 6, wobei sich der bzw. die Dichtungsmaterialkanäle (13, 14, 15) im wesentlichen und vorzugsweise vollständig innerhalb des statischen Bauteils (10) erstrecken.

8. Statisches Bauteil (10) nach einem der vorhergehenden Ansprüche, wobei sich der Dichtungsmaterialkanal (13, 14, 15) bzw. zumindest einer oder einige der Dichtungsmaterialkanäle (13, 14, 15) zumindest zu einer Seite des statischen Bauteils (10) öffnen.

9. statisches Bauteil (10) nach einem der vorhergehenden Ansprüche, wobei sich der Dichtungsmaterialkanal (13, 14, 15) bzw. zumindest einer oder einige der Dichtungsmaterialkanäle von der Dichtung (21, 22) in das statische Bauteil (10) erstrecken.

10. Statisches Bauteil (10) nach einem der Ansprüche 2 bis 9 in Anhängigkeit von Anspruch 2, wobei der sich entlang der Oberfläche des statischen Bauteils erstreckende Dichtungsmaterialkanal (13, 14, 15) zumindest teilweise bis zu der Oberfläche des statischen Bauteils erstreckt, wobei die Breite des Dichtungsmaterialkanals (13, 14, 15) an der Oberfläche des statischen Bauteils kleiner als die größte Breite des Dichtungsmaterialkanals (13, 14, 15) ist.

11. Statisches Bauteil (10) nach Anspruch 10, wobei die Breite des Dichtungsmaterialkanale (13, 14, 15) an der Oberfläche des statischen Bauteils weniger als 90%, vorzugsweise weniger als 70%, weiter vorzugsweise weniger als 50%, weiter vorzugsweise weniger als 30%, und bevorzugt ungefähr 10% der größten Breite des Dichtungsmaterialkanals (13, 14, 15) beträgt.

12. Statisches Bauteil (10) nach einem der Ansprüche 10 bis 11, wobei die Breite des Dichtungsmaterialkanals (13, 14, 15) an der Oberfläche des statischen Bauteils mehr als 10%, vorzugsweise mehr als 20%, weiter vorzugsweise mehr als 30%, weiter vorzugsweise mehr als 40%, und bevorzugt ungefähr 50% der größten Breite des Dichtungsmaterialkanals (13, 14, 15) beträgt.

13. Statisches Bauteil (10) nach einem der vorhergehenden Ansprüche mit zumindest drei angeformten Dichtungen, wobei zumindest zwei der angeformten statischen Dichtungen auf gegenüberliegenden Seiten des statischen Bauteils angeordnet sind.

14. Statisches Bauteil (10) nach Anspruch 13, wobei die gegenüberliegenden Seiten parallel zueinander verlaufen.

15. Statisches Bauteil (10) nach einem der vorhergehenden Ansprüche mit zumindest drei angeformten Dichtungen, wobei zumindest zwei der angeformten, statischen Dichtungen auf aneinandergrenzenden Seiten des statischen Bauteils angeordnet sind.

16. Statisches Bauteil (10) nach Anspruch 15, wobei die aneinandergrenzenden Seiten senkrecht zueinander angeordnet sind.

17. Statisches Bauteil (10) nach einem der vorhergehenden Ansprüche, wobei die statische Dichtung(en) (jeweils) zumindest eine Fluidkanalöffnung des statischen Bauteils (10) umschließt (umschließen).

18. Statisches Bauteil (10) nach einem der vorhergehenden Ansprüche, wobei das statische Bauteil aus einem steifen harten Material bzw. Hartkunststoff ausgebildet ist, vorzugsweise aus einem harten Thermoplast bzw. technischen Thermoplast (z.B. PA, PBT, PPS, PEEK usw.), bevorzugt aus PEEK (Polyetheretherketon), wobei weiter vorzugsweise Füllstoffe (z.B. GF, GK, CF usw.) und/oder Verstärkungsfasern (z.B. Glasfasern, Kohlefasern usw.) vorgesehen sind.

19. Statisches Bauteil (10) nach einem der vorhergehenden Ansprüche, wobei das Dichtungsmaterial (20) aus einem duroplasten Elastomer ausgebildet ist, vorzugsweise aus einem Kautschuk, bevorzugt aus HNBR, NBR, EPDM.

20. Statisches Bauteil (10) nach einem der Ansprüche 1 bis 19, wobei das Dichtungsmaterial (20) aus TPE, ACM, Silikon, Metall (beispielsweise Kupfer) oder Keramik ausgebildet ist.

21. Statisches Bauteil (10) nach einem der vorhergehenden Ansprüche, wobei die statischen Dichtungen jeweils in einer Dichtungsnut, vertiefung und/oder Aufnahme angeordnet sind.

22. Statisches Bauteil (10) nach einem der vorhergehenden Ansprüche, wobei zumindest eine statische Dichtung (21, 22) einen Dichtungsring zur Abdichtung zumindest einer Öffnung eines in dem statischen Bauteil vorgesehenen Fluidkanals (11, 12) und zumindest einer damit zu verbindenden Öffnung eines in einem zweiten statischen Bauteil vorgesehenen Fluidkanals (11, 12) aufweist, wobei die statische Dichtung (21, 22) zumindest einen Versteifungssteg (1027, 1028) aufweist, der zwei Stellen des Dichtungsrings miteinander verbindet.

23. Statisches Bauteil (10) nach Anspruch 22, wobei die statische Dichtung (21, 22) mehrere versteifungsstege (1027, 1028) aufweist, die vorzugsweise im wesentlichen parallel zueinander verlaufen.

24. Statisches Bauteil (10) nach einem der Ansprüche 22 bis 23, wobei der bzw. die Versteifungsstege (1027, 1028) einen im wesentlichen rechteckigen Querschnitt aufweisen.

25. Statisches Bauteil (10) nach einem der Ansprüche 22 bis 24, wobei die Öffnungen der zu verbindenden Fluidkanäle (11, 12) zueinander versetzt sind.

26. Statisches Bauteil (10) nach einem der Ansprüche 22 bis 25, wobei die Öffnungen der zu verbindenden Fluidkanäle jeweils gegenüberliegenden Endabschnitten der statischen Dichtung (21, 22) zugeordnet sind.

27. Statisches Bauteil (10) nach einem der Ansprüche 22 bis 26, wobei der bzw. die Versteifungsstege (1027, 1028) zwischen zwei Abschnitten der statischen Dichtung (21, 22) angeordnet sind, die jeweils einer Öffnung der zu verbindenden Fluidkanäle zugeordnet sind.

28. Statisches Bauteil (10) nach einem der Ansprüche 22 bis 27, wobei der bzw. die Versteifungsstege (1027, 1028) im wesentlichen senkrecht zu einer gedachten Verbindungslinie zwischen den Öffnungen der zu verbindenden Fluidkanäle verlaufen.

29. Statisches Bauteil (10) nach einem der Ansprüche 22 bis 28, wobeider Dichtungsring der statischen Dichtung (21, 22) bzw. die Dichtungsringe der statischen Dichtungen (21, 22) jeweils einen runden, ovalen, ellipsenförmigen, eiförmigen, rechteckigen, wellenförmigen, quadratischen und/oder krummlinigen Querschnitt aufweisen.

30. Statisches Bauteil (10) nach einem der vorhergehenden Ansprüche, wobeider Dichtungsring der statischen Dichtung (21, 22) bzw. die Dichtungsringe der statischen Dichtungen (21, 22) jeweils eine runde, ovale, ellipsenförmige, eiförmige, wellenförmige, rechteckige, quadratische und/oder krummlinige Form aufweisen.

31. Statisches Bauteil (10) nach einem der vorhergehenden Ansprüche, wobeidie Höhe des bzw. der Versteifungsstege (1027, 1028) mindestens 5% des Höhe der Dichtung, vorzugsweise mindestens 10% des Höhe der Dichtung, insbesondere vorzugsweise mindestens 20% des Höhe der Dichtung, und bevorzugt ungefähr 30% der Höhe der Dichtung (21, 22) beträgt.

32. Statisches Bauteil (10) nach einem der vorhergehenden Ansprüche, wobeidie Höhe des bzw. der Versteifungsstege (1027, 1028) höchstens 70% des Höhe der Dichtung, vorzugsweise höchstens 50% des Höhe der Dichtung, insbesondere vorzugsweise höchstens 40% des Höhe der Dichtung, und bevorzugt ungefähr 30% der Höhe der Dichtung (21, 22) beträgt.

33. Verfahren zur Herstellung eines statischen Bauteils (10) nach einem der vorhergehenden Ansprüche, **dadurch gekennzeichnet, dass** die statischen Dichtungen durch Spritzpressen (Transfer-Moulding) oder Spritzgießen. (Injection-Moulding) angeformt werden.

## Claims

1. Static component (10) having at least two static gaskets (21, 22) formed thereon, wherein the static component 10) and the static gasket (21, 22) formed thereon are made in such a way that the static gasket (21, 22) formed thereon is attached to the static component (10) in positive connection, wherein the at least two static gaskets (21, 22) formed thereon are connected to one another by at least one gasket material channel (13, 14, 15) or a plurality of gasket material channels (13, 14, 15),
wherein at least two of the static gaskets (21, 22) formed thereon are arranged on the same side of the static component (10).

2. Static component (10) according to claim 1, wherein the gasket material channel (13, 14, 15) or at least one or some of the gasket material channels (13, 14, 15) extend along the surface of the static component (10).

3. Static component (10) according to claim 2, wherein the gasket material channel (13, 14, 15) extending along the surface of the static component (10) runs below the surface of the static component (10) or at least one or some of the gasket material channels (13, 14, 15) extending along the surface of the static component (10) run below the surface of the static component (10).

4. Static component (10) according to any of the preceding claims, wherein the gasket material channel (13, 14, 15) or at least one of the gasket material chancel (13, 14, 15) extends away from the gasket (21, 22) and contains gasket material (20) which is connected to the gasket (21, 22) in integral fashion.

5. Static component (10) according to any of the preceding claims, wherein the static component (10) has a plurality and preferably two gasket material channels (13, 14, 15) which extend away from or static gasket (21, 22) and contain gasket material (20) which is connected to the gasket (21, 22) in integral fashion.

6. Static component (10) according to claim 5, wherein the gasket material channels (13, 14, 15) extend in substantially opposite directions.

7. Static component (10) according to any of claims 4 to 6, wherein the gasket material channel or channels (13, 14, 15) extend substantially and preferably fully inside the static component (10).

8. Static component (10) according to any of the preceding claims, wherein the gasket material channel (13, 14, 15) or at least one or some of the gasket material channels (13, 14, 15) open to at least one side of the static component (10).

9. Static component (10) according to any of the preceding claims, wherein the gasket material channel (13, 14, 15) or at least one or some of the gasket material channels extend from the gasket (21, 22) into the static component (10).

10. Static component (10) according to any of claims 2 to 9 depending on claim 2, wherein the gasket material channel (13, 14, 15) extending along the surface of the static component extends at least in part up to the surface of the static component, wherein the width of the gasket material channel (13, 14, 15) on the surface of the static component is smaller than the greatest width of the gasket material channel (13, 14, 15).

11. Static component (10) according to claim 10, wherein the width of the gasket material channel (13, 14, 15) on the surface of the static component is less than 90 %, preferably less than 70 %, more preferably less than 50 %, more preferably less than 30 %, and preferably about 10 % of the greatest width of the gasket material channel (13, 14, 15).

12. Static component (10) according to any of claims 10 to 11, wherein the width of the gasket material channel (13, 14, 15) on the surface of the static component is more than 10 %, preferably more than 20 %, more preferably more than 30 %, more preferably more than 40 % and preferably about 50 % of the greatest width of the gasket material channel (13, 14, 15).

13. Static component (10) according to any of the preceding claims, comprising at least three gaskets formed thereon, wherein at least two of the static gaskets formed thereon are arranged on opposite sides of the static component.

14. Static component (10) according to claim 13, wherein the opposite sides run parallel to each other.

15. Static component (10) according to any of the preceding claims, comprising at least three gaskets formed thereon, wherein at least two of the static gaskets formed thereon are arranged on adjoining sides of the static component.

16. Static component (10) according to claim 15, wherein the adjoining sides are arranged perpendicularly to each other.

17. Static component (10) according to any of the preceding claims, wherein the gasket(s) surround(s) (in each case) at least one fluid channel opening of the static component (10).

18. Static component (10) according to any of the preceding claims, wherein the static component is formed of the rigid hard material or rigid plastic material, preferably of a hard thermoplastics or technical thermoplastics (e.g. PA, PBT, PPS, PEEK, etc.), preferably of PEEK (poylethyer ether ketone), wherein fillers (e.g. GF, GK, CF, etc.) and/or reinforcing fibers (e.g. glass fibers, carbon fibers, etc.) are also preferably provided.

19. Static component (10) according to any of the preceding claims, wherein the gasket material (20) is made of a duroplastic elastomer, preferably of a rubber, preferably of HNBR, NBR, EPDM.

20. Static component (10) according to any of claims 1 to 19, wherein the gasket material (20) is made of TPE, ACM, silicone, metal (e.g. copper) or ceramics.

21. Static component (10) according to any of the preceding claims, wherein the static gaskets are arranged in each case in a gasket groove, recess and/or retainer.

22. Static component (10) according to any of the preceding claims, wherein at least one static gasket (21, 22) has a sealing ring for sealing at least one opening of a fluid channel (11, 12) provided in the static component and at least one opening of a fluid channel (11, 12) provided in a second static component, wherein said latter opening is to be connected thereto, wherein the static gasket (21, 22) has at least one reinforcing web (1027, 1028) which connects two points of the sealing ring to one another.

23. Static component (10) according to claim 22, wherein the static gasket (21, 22) has a plurality of reinforcing webs (1027, 1028) which preferably run substantially parallel to one another.

24. Static component (10) according to any of claims 22 to 23, wherein the reinforcing web or webs (1027, 1028) have a substantially rectangular cross-section.

25. Static component (10) according to any of claims 22 to 24, wherein the openings of the fluid channels (11, 12) to be connected are displaced relative to one another.

26. Static component (10) according to any of claims 22 to 25, wherein the openings of the fluid channels to be connected are assigned in each case to opposite end portions of the gasket (21, 22).

27. Static component (10) according to any of claims 22 to 26, wherein the reinforcing web or webs (1027, 1028) are arranged between two segments of the static gasket (21, 22), each of which is assigned to an opening of the fluid channels to be connected.

28. Static component (10) according to any of claims 22 to 27, wherein the reinforcing web or webs (1027, 1028) extend substantially perpendicularly to an imaginary connecting line between the openings of the fluid channels to be connected.

29. Static component (10) according to any of claims 22 to 28, wherein the sealing ring of the static gasket (21, 22) or the sealing rings of the static gaskets (21, 22) in each case have a round, oval, elliptical, oviform, rectangular, wave-like, square and/or curvilinear cross-section.

30. Static component (10) according to any of the preceding claims, wherein the sealing ring of the static gasket (21, 22) or the stealing rings of the static gaskets (21, 22) in each case have a round, oval, elliptical, oviform, wave-like, rectangular, square and/or curvilinear shape.

31. Static component (10) according to any of the preceding claims, wherein the height of the reinforcing web or webs (1027, 1028) is at least 5 % of the height of the gasket, preferably at least 10 % of the height of the gasket, in particular preferably at least 20 % of the height of the gasket and preferably approximately 30 % of the height of the gasket (21, 22).

32. Static component (10) according to any of the preceding claims, wherein the height of the reinforcing web or webs (1027, 1028) is at most 70 % of the height of the gasket, preferably at most 50 % of the height of the gasket, in particular preferably at most 40 % of the height of the gasket and preferably approximately 30 % of the height of the gasket (21, 22).

33. A method for producing a static component (10) according to any of the preceding claims, **characterized in that** the static gaskets are attached by forming using transfer moulding or injection molding.

## Revendications

1. Composant statique (10) comprenant au moins deux joints statiques conformés (21, 22), ledit composant statique (10) et le joint statique conformé (21, 22) étant réalisés de telle manière que le joint statique conformé (21, 22) est fixé en coopération de formes sur le composant statique (10), dans lequel lesdits au moins deux joints statiques conformés (21, 22) sont reliés l'un à l'autre/les uns aux autres par au moins un canal pour matériau de joint (13, 14, 15) ou par plusieurs canaux pour matériau de joint (13, 14, 15),
dans lequel au moins deux des joints statiques conformés (21, 22) sont agencés du même côté du composant statique (10).

2. Composant statique (10) selon la revendication 1, dans lequel le canal pour matériau de joint (13, 14, 15), ou respectivement au moins un ou quelques-uns des canaux pour matériau de joint (13, 14, 15) s'étend/s'étendent le long de la surface du composant statique (10).

3. Composant statique (10) selon la revendication 2, dans lequel le canal pour matériau de joint (13, 14, 15) qui s'étend le long de la surface du composant statique (10) s'étend au-dessous de la surface du composant statique (10), ou respectivement au moins un ou quelques-uns des canaux pour matériau de joint (13, 14, 15) qui s'étendent le long de la surface du composant statique (10) s'étendent au-dessous de la surface du composant statique (10).

4. Composant statique (10) selon l'une des revendications précédentes, dans lequel le canal pour matériau de joint (13, 14, 15) ou respectivement au moins un des canaux pour matériau de joint (13, 14, 15) s'étend/s'étendent en éloignement du joint (21, 22) et contient/contiennent du matériau de joint (20), qui est relié d'un seul tenant avec le joint statique (21, 22).

5. Composant statique (10) selon l'une des revendications précédentes, dans lequel le composant statique (10) comporte plusieurs et de préférence deux canaux pour matériau de joint (13, 14, 15), qui s'étendent en éloignement d'un joint statique (21, 22) et contiennent du matériau de joint (20) qui est relié d'un seul tenant avec le joint statique (21, 22).

6. Composant statique (10) selon la revendication 5, dans lequel les canaux pour matériau de joint (13, 14, 15) s'étendent dans des directions sensiblement opposées.

7. Composant statique (10) selon l'une des revendications 4 à 6, dans lequel le canal ou les canaux pour matériau de joint (13, 14, 15) s'étend/s'étendent sensiblement et de préférence entièrement à l'intérieur du composant statique (10).

8. Composant statique (10) selon l'une des revendications précédentes, dans lequel le canal pour matériau de joint (13, 14, 15), ou respectivement au moins un ou quelques-uns des canaux pour matériau de joint (13, 14, 15) s'ouvre/s'ouvrent au moins vers un côté du composant statique (10).

9. Composant statique (10) selon l'une des revendications précédentes, dans lequel le canal pour matériau de joint (13, 14, 15), ou respectivement au moins un ou quelques-uns des canaux pour matériau de joint s'étend/s'étendent depuis le joint (21, 22) jusque dans le composant statique (10).

10. Composant statique (10) selon l'une des revendications 2 à 9 prise en dépendance de la revendication 2, dans lequel le canal pour matériau de joint (13, 14, 15) qui s'étend le long de la surface du composant statique s'étend au moins partiellement jusqu'à la surface du composant statique, et la largeur du canal pour matériau de joint (13, 14, 15) à la surface du composant statique est plus petite que la plus grande largeur du canal pour matériau de joint (13, 14, 15).

11. Composant statique (10) selon la revendication 10, dans lequel la largeur du canal pour matériau de joint (13, 14, 15) à la surface du composant statique est plus petite que 90 %, de préférence plus petite que 70 %, de manière encore plus préférée plus petite que 50 %, de façon encore plus préférée plus petite que 30 %, et s'élève de préférence à environ 10 % de la plus grande largeur du canal pour matériau de joint (13, 14, 15).

12. Composant statique (10) selon l'une des revendications 10 ou 11, dans lequel la largeur du canal pour matériau de joint (13, 14, 15) à la surface du composant statique est plus grande que 10 %, de préférence plus grande que 20 %, de manière encore plus préférée plus grande que 30 %, de façon encore plus préférée plus grande que 40 %, et s'élève de préférence à environ 50 % de la plus grande largeur du canal pour matériau de joint (13, 14, 15).

13. Composant statique (10) selon l'une des revendications précédentes, comprenant au moins trois joints conformés, dans lequel au moins deux des joints statiques conformés sont agencés sur des côtés opposés du composant statique.

14. Composant statique (10) selon la revendication 13, dans lequel les côtés opposés s'étendent parallèlement l'un à l'autre.

15. Composant statique (10) selon l'une des revendications précédentes, comprenant au moins trois joints conformés, dans lequel au moins deux des joints statiques conformés sont agencés sur des côtés adjacents du composant statique.

16. Composant statique (10) selon la revendication 15, dans lequel les côtés adjacents sont agencés perpendiculairement l'un à l'autre.

17. Composant statique (10) selon l'une des revendications précédentes, dans lequel le joint ou les joints statiques entoure/entourent au moins une ouverture d'un canal pour fluide du composant statique (10).

18. Composant statique (10) selon l'une des revendications précédentes, dans lequel le composant statique est réalisé en un matériau dur et rigide, respectivement en matière plastique dure, de préférence en matière thermoplastique dure ou une matière thermoplastique technique (par exemple PA, PBT, PPS, PEEK, etc.), de préférence en PEEK (polyéther éther cétone), et dans lequel sont prévues de préférences des matières de charge (par exemple GF, GK, CF, etc.) et/ou des fibres de renforcement (par exemple fibres de verre, fibres de carbone, etc.).

19. Composant statique (10) selon l'une des revendications précédentes, dans lequel le matériau de joint (20) est réalisé en élastomère thermodurcissable, de préférence en caoutchouc, et de préférence en HNBR, NBR, EPDM.

20. Composant statique (10) selon l'une des revendications 1 à 19, dans lequel le matériau de joint (20) est réalisé en TPE, ACM, silicium, métal (par exemple cuivre) ou céramique.

21. Composant statique (10) selon l'une des revendications précédentes, dans lequel les joints statiques sont respectivement agencés dans une gorge pour joint, dans un renfoncement et/ou dans un logement.

22. Composant statique (10) selon l'une des revendications précédentes, dans lequel au moins un joint statique (21, 22) comprend une bague de joint pour étancher au moins une ouverture d'un canal pour fluid (11, 12) prévu dans le composant statique, et au moins une ouvertures, à relier à celui-ci, d'un canal pour fluide (11, 12) prévu dans un second composant statique, dans lequel le joint statique (21, 22) comprend au moins une barrette de rigidification (1027, 1028) qui relie deux emplacements de la bague de joint l'un à l'autre.

23. Composant statique (10) selon la revendication 22, dans lequel le joint statique (21, 22) comprend plusieurs barrettes de rigidification (1027, 1028) qui s'étendent de préférence sensiblement parallèlement les unes aux autres.

24. Composant statique (10) selon l'une des revendications 22 et 23, dans lequel la ou les barrette(s) de rigidification (1027, 1028) présente/présentent une section transversale sensiblement rectangulaire.

25. Composant statique (10) selon l'une des revendications 22 à 24, dans lequel les ouvertures des canaux pour fluide (11, 12) à relier sont décalées les unes par rapport aux autres.

26. Composant statique (10) selon l'une des revendications 22 à 25, dans lequel les ouvertures des canaux pour fluide à relier sont associée respectivement à des tronçons terminaux opposés du joint statique (21, 22).

27. Composant statique (10) selon l'une des revendications 22 à 26, dans lequel la ou les barrette(s) de rigidification (1027, 1028) est/sont agencée(s) entre deux tronçons du joint statique (21, 22) qui sont respectivement associés à une ouverture des canaux pour fluide à relier.

28. Composant statique (10) selon l'une des revendications 22 à 27, dans lequel la ou les barrette(s) de rigidification (1027, 1028) s'étend/s'étendent sensiblement perpendiculairement à une ligne de liaison imaginaire entre les ouvertures des canaux pour fluide à relier.

29. Composant statique (10) selon l'une des revendications 22 à 28, dans lequel la bague de joint du joint statique (21, 22), ou respectivement les bagues de joint des joints statiques (21, 22) présente/présentent respectivement une section transversale ronde, ovale, de forme ellipsoïdale, de forme ovoïde, de forme ondulée, rectangulaire, carrée et/ou avec des lignes incurvées.

30. Composant statique (10) selon l'une des revendications précédentes, dans lequel la bague de joint du joint statique (21, 22), ou respectivement les bagues de joint des joints statiques (21, 22) présente/présentent respectivement une forme ronde, ovale, de forme ellipsoïdale, de forme ovoïde, de forme ondulée, rectangulaire, carrée et/ou avec des lignes incurvées.

31. Composant statique (10) selon l'une des revendications précédentes, dans lequel la hauteur de la ou des barrette(s) de rigidification (1027, 1028) s'élève à au moins 5 % de la hauteur du joint, de préférence au moins 10 % de la hauteur du joint, en particulier de préférence au moins 20 % de la hauteur du joint, et s'élève de préférence environ à 30 % de la hauteur du joint (21, 22).

32. Composant statique (10) selon l'une des revendications précédentes, dans lequel la hauteur de la ou des barrette(s) de rigidification (1027, 1028) s'élève au plus à 70 % de la hauteur du joint, de préférence au plus à 50 % de la hauteur du joint, en particulier de préférence au plus à 40 % de la hauteur du joint, et s'élève de préférence environ à 30 % de la hauteur du joint (21, 22).

33. Procédé pour la fabrication d'un composant statique (10) selon l'une des revendications précédentes,
**caractérisé en ce que** les joints statiques sont conformés par injection sous pression (moulage transfert) ou par moulage par injection.
